# EUROPÄISCHE PATENTSCHRIFT

(11) **EP 3 555 998 B1**
(45) Veröffentlichungstag und Bekanntmachung des Hinweises auf die Patenterteilung: **23.09.2020**
(21) Anmeldenummer: 17791066.8
(22) Anmeldetag: 26.10.2017
(51) Int. Cl.: H02K 19/12, H02K 11/02

(54) **ROTOR UND ROTORSCHALTUNG FÜR EINEN ELEKTROMOTOR**
ROTOR AND ROTOR CIRCUIT FOR AN ELECTRICAL MOTOR
ROTOR ET CIRCUIT DE ROTOR POUR UN MOTEUR ÉLECTRIQUE

(30) Priorität: 14.12.2016 DE 102016224916
(43) Veröffentlichungstag der Anmeldung: 23.10.2019
(73) Patentinhaber: Bayerische Motoren Werke Aktiengesellschaft, 80809 München (DE)
(72) Erfinder: HERRMANN, Hubert, 85778 Haimhausen (DE)
(86) Internationale Anmeldenummer: PCT/EP2017/077397
(87) Internationale Veröffentlichungsnummer: WO 2018/108372

(56) Entgegenhaltungen:
- DE-A1- 1 538 411
- RU-C1- 2 059 994
- US-A- 3 654 503
- US-A1- 2010 019 711

## Beschreibung

Die vorliegende Erfindung betrifft einen Rotor für einen Elektromotor, insbesondere einen fremderregten Synchronmotor, eine Rotorschaltung mit einem solchen Rotor zu seiner Ansteuerung, sowie einen fremderregten Synchronmotor mit einem solchen Rotor.

In vielen elektrischen Systemen kommen Elektromotoren für verschiedenste Aufgaben zum Einsatz. Bei elektrisch betriebenen Fahrzeugen, insbesondere Kraftfahrzeugen, wie etwa PKWs, werden Elektromotoren als Traktionsmaschinen eingesetzt. Bei Elektromotoren sind verschiedenste Bauarten bekannt, insbesondere der sogenannte "Synchronmotor". Darunter versteht man eine Einphasen- und Drehstrom-Synchronmaschine im Motorbetrieb, bei der ein meist konstant magnetisierter Rotor (Läufer) im Normalbetrieb (keine Überlastung) synchron von einem bewegten magnetischen Drehfeld im Stator mitgenommen wird.

Der Rotor kann mittels zumindest einen Permanentmagneten oder Elektromagneten ausgebildet sein. Im ersten Fall spricht man von einem "selbsterregten" (Synchron-) Motor und im zweiten Fall, von einem "fremderregten" (Synchron-)Motor, bei dem das mit dem Magnetfeld des Stators wechselwirkende Magnetfeld des Rotors erst mittels eines entsprechenden Stromflusses durch zumindest eine Feldspule (Rotorwicklung) am Rotor erzeugt wird. Die mittels der magnetischen Wechselwirkung zwischen dem Stator und dem Rotor bereitgestellte Energie kann über eine mit dem Rotor über dessen Rotorkörper verbundene oder einstückig damit ausgebildete Rotorwelle abgegriffen und beispielsweise zum Antrieb eines Kraftfahrzeugs oder einer anderen Maschine verwendet werden.

US 2010/019711 A1 offenbart einen Motor, der einen Rotor aufweist, dessen Pole jeweils eine elektromagnetische Spule anstelle eines Permanentmagneten aufweisen, wobei die magnetische Intensität der Pole des Rotors gemäß Eingangsströmen oder einem Rückkopplungssignal gesteuert werden kann. Dadurch kann die durch Permanentmagnete bedingte Beschränkung des Drehmomentes und der Drehzahl des Motors aufgehoben und die Leistung des Motors verbessert werden.

US 3654503 A offenbart einen mit Startwiderständen versehenen Synchronmotor, wobei die Startwiderstände an jeder Feldspule oder zwischen Feldspulenpaaren so angeschlossen sind, dass der induzierte Feldstrom nur auf den Teil der Feldspulen beschränkt wird, der dem Luftspalt am nächsten liegt.

RU 2059994 offenbart einen elektrischen Motor, der einen Stator und einen Rotor aufweist, wobei die Pole des Stators mit 3-Phasen Windungen versehen sind und die Pole des Rotors entweder mit elektromagnetischer Erregung oder Erregung über Permanentmagneten ausgebildet sind.

DE1538411 A1 offenbart ein Verfahren zum Steuern der Blindleistung in einem Versorgungsnetz mit darin angeordneter Wechselstrommaschine durch Ändern des einer Rotorwicklung der Maschine zugeführten Gleichstroms.

In den meisten Fällen sind der Rotorkörper und die Rotorwelle aus elektrisch leitendem Material, insbesondere aus Metall, ausgebildet. Dies hat zur Folge, dass beim fremderregten Elektromotor zwischen dem Rotorkörper und der Rotorwelle einerseits und der wenigstens einen sie umgebenden Rotorwicklung andererseits elektrische Streukapazitäten auftreten können, sodass es während des Betriebs des Elektromotors, insbesondere auch bei einer pulsweitenmodulierten Versorgungsspannung, in der Rotorwicklung aufgrund kapazitiver Kopplung zu parasitären Strömen im Rotorkörper und der Rotorwelle kommen kann. Solche Ströme führen zum einen zu unerwünschten Energieverlusten und können andererseits auch zu Schädigungen der Rotorwelle selbst oder ihrer Lager führen. Um solche Lagerschädigungen zu verringern, werden typischerweise Lagerschutzvorrichtungen zur Erdung der Rotorwelle vorgesehen, welche die Lager "kurzschließen" und so einen Stromdurchgang durch die Lager vermeiden sollen.

Der vorliegenden Erfindung liegt die Aufgabe zugrunde, die mittels einer solchen kapazitiven Kopplung zwischen Rotorwicklung und Rotorkörper bzw. Rotorwelle verbundenen Nachteile weiter zu reduzieren.

Eine Lösung dieser Aufgabe wird gemäß der Lehre der unabhängigen Ansprüche erreicht durch einen Rotor gemäß Anspruch 1 für einen Elektromotor, eine Rotorschaltung gemäß Anspruch 6, sowie einen fremderregten Synchronmotor mit einem solchen Rotor. Verschiedene Ausführungsformen und Weiterbildungen der Erfindung sind Gegenstand der Unteransprüche.

Ein erster Aspekt der Erfindung betrifft einen Rotor für einen Elektromotor, insbesondere einen fremderregten Synchronmotor. Der Rotor weist einen Rotorkörper und eine gerade Anzahl n von an dem Rotorkörper angeordneten Polen mit jeweils einer Rotorwicklung auf. Die Rotorwicklungen der Pole sind zwischen zwei zur Zuleitung bzw. Ableitung eines elektrischen Erregerstroms durch die Rotorwicklungen dienenden elektrischen Anschlüssen des Rotors, die insbesondere Schleifringanschlüsse sein können, in Reihe geschaltet. Die Rotorwicklung kann insbesondere so ausgebildet sein, dass die Polarität der in der Reihe aufeinander folgenden Pole alterniert. Dabei weist die Reihenschaltung einen ersten Abschnitt auf, zu dem die von einem ersten der Anschlüsse aus in der Reihenschaltung zuerst angeordneten n/2 Rotorwicklungen gehören, und einen zweiten Abschnitt, zu dem die in der Reihenschaltung verbleibenden weiteren vor dem zweiten der Anschlüsse angeordneten n/2 Rotorwicklungen gehören. Die Rotorwicklungen und die Reihenschaltung sind in solcher Weise ausgeführt, dass bei Anlegen einer Gleichspannung zwischen den beiden Anschlüssen in jeder der Rotorwicklungen des ersten Abschnitts die Radialkomponente des in der Reihenschaltung auftretenden Gleichstromflusses durch die jeweilige Rotorwicklung insgesamt von einer Innenseite zu einer Außenseite der Rotorwicklung verläuft und in jeder der Rotorwicklungen des zweiten Abschnitts umgekehrt insgesamt von einer Außenseite zu einer Innenseite der Rotorwicklung.

Unter einem "Polpaar" im Sinne der Erfindung ist, wie in der Elektrotechnik üblich, ein Paar aus einem magnetischen Nordpol und dem zugehörigen magnetischen Südpol zu verstehen. Ein Polpaar kann insbesondere, wie hier, mittels eines Elektromagneten erzeugt werden, der dazu typischerweise eine gewickelte Feldspule aufweist, die in der Regel um einen Kern aus ferromagnetischem Material (z.B. Eisen) gewickelt ist, der dazu dient, das von der Feldspule erzeugte Magnetfeld zu führen und zu verstärken. Der Kern kann insbesondere Teil des Rotorkörpers sein.

Unter einer "Rotorwicklung" im Sinne der Erfindung ist eine Feldspule des Rotors zu verstehen, die bei einem Stromfluss durch sie ein solches Polpaar erzeugt, das vorgesehen ist, mit einem von einem zugehörigen Stator erzeugten Magnetfeld zum Zwecke des elektromotorischen Antriebs des Motors zusammenzuwirken.

Unter der "Radialkomponente" des in der Reihenschaltung beim Betrieb des Rotors auftretenden Gleichstromflusses durch die jeweilige Rotorwicklung ist im Sinne der Erfindung die Richtungskomponente des Gleichstromflusses durch die Rotorwicklung zu verstehen, die - unabhängig von der Form des Querschnitts der Rotorwicklung, der insbesondere eine zumindest im Wesentlichen kreisförmige, rechteckige, ovale Form oder auch eine andere Form annehmen kann - zur Richtung der Wickelhöhe der Rotorwicklung korrespondiert. Da in der Regel die Rotorwicklung lagenweise ausgeführt ist entspricht in diesem Fall die Radialkomponente insbesondere einer senkrecht zu den aufeinanderfolgenden Lagen der Rotorwicklung verlaufenden Richtung. Der Stromfluss durch die jeweilige Rotorwicklung verläuft somit insgesamt von einer Außenseite zu einer Innenseite der Rotorwicklung (bzw. umgekehrt), wenn der in Richtung der Wickelhöhe verlaufende Netto-Stromfluss, der sich als Summe bzw. Integral der Radialkomponenten des Stroms entlang der gesamten Rotorwicklung eines Poles bestimmen lässt, von einer Außenseite zu einer Innenseite der Rotorwicklung (bzw. umgekehrt) verläuft, wobei nicht ausgeschlossen ist, dass die Rotorwicklung auch einen oder mehrere einzelne Bereiche aufweist, in denen die radiale Stromflusskomponente in gegenläufiger Richtung verläuft. Die Wicklungen der einzelnen Rotorwicklungen sind bevorzugt schraubenförmig oder orthozyklisch ausgeführt. Wilde Wicklungen sind jedoch auch möglich.

Zum Verständnis der Erfindung und ihrer Vorteile ist es hilfreich, die folgenden beiden hier zusammenwirkenden physikalischen Effekte zu betrachten:
Zum einen setzt sich der jeweilige elektrische Gesamtwiderstand Z (auch als Scheinwiderstand oder Impedanz bezeichnet) der einzelnen in Reihe geschalteten Rotorwicklungen (Feldspulen) des Rotors in der Realität aus einem (in der Regel ohmschen) Wirkwiderstand der Feldspule und ihrem induktiven Blindwiderstand zusammen. Wenn nun die Reihenschaltung an eine Versorgungsspannung angelegt wird, ergibt sich somit über jeder der Rotorwicklungen ein Spannungsabfall, sodass die Summe der Spannungsabfälle der Versorgungsspannung entspricht. Folglich ist das, beispielsweise gegen Masse gemessene Spannungspotenzial an dem zum Pluspunkt der Versorgungsspannung gerichteten Ende der Rotorwicklung höher, als am zum Minuspol gerichteten Ende.

Zum anderen treten zwischen dem Rotorkörper und insbesondere seiner Rotorwelle und den um ihn bzw. sie herum angeordneten Rotorwicklungen zudem regelmäßig Streukapazitäten auf, die zu einer kapazitiven Kopplung zwischen den Rotorwicklungen und dem Rotorkörper bzw. der Rotorwelle und somit aufgrund dieser Kopplung in dem Rotorkörper bzw. der Rotorwelle erzeugten Strömen führen können. Diese kapazitive Kopplung kann dabei insbesondere über entsprechende Spulenkerne der Rotorwicklungen, die insbesondere integraler Bestandteil des Rotorkörpers sein können, vermittelt werden. Aufgrund der allgemeinen Abstandsabhängigkeit der Kapazität (beim Plattenkondensator gilt bekanntlich: C ∼ A/d, wobei C die Kapazität, A die Elektrodenfläche und d der Abstand der Elektroden (Platten) ist) tragen dabei die in radialer Richtung näher am Zentrum der Rotorwicklung hin angeordneten Anteile (insbesondere Wicklungslagen) der Rotorwicklung mehr zu dieser kapazitiven Kopplung bei, als die weiter außen gelegenen Anteile (insbes. Wicklungslagen). Zudem ist der Effekt dieser Kopplung insbesondere spannungsabhängig, so dass bei höherer Spannung höhere Ströme im Rotorkörper bzw. in der Welle resultieren.

In Kombination bewirken diese beiden technischen Effekte, dass es für die kapazitive Kopplung einen Unterschied macht, ob der Strom in die Rotorwicklung an ihrer Innenseite eintritt und von dort in radialer Richtung, (z.B. Lage für Lage) nach außen fließt, oder umgekehrt. Im ersten Falle weist der stark kapazitiven koppelnde innere Teil der Rotorwicklung ein höheres elektrisches Spannungspotenzial auf, das somit einen stärkeren Stromfluss in dem Rotorkörper bzw. der Rotorwelle bewirken kann. Im zweitgenannten Fall dagegen, liegt der stark koppelnde innere Teil der Rotorwicklung aufgrund des Gesamtwiderstands Z der Rotorwicklung auf einem niedrigeren elektrischen Potenzial, sodass auch die aufgrund der Kopplung erzeugten Ströme in dem Rotorkörper bzw. der Rotorwelle geringer ausfallen.

Durch den vorgeschlagenen Aufbau des Rotors kann die Höhe des Gleichtaktstroms gegenüber einem unsymmetrischen Fall verringert werden, da nun die Rotorwicklungen mit entgegengesetzter Polarität, die sich paarweise in Ihrer Anordnung in der Reihe entsprechen (z.B. die beiden unmittelbar mit den Anschlüssen verbundenen Rotorwicklungen, oder die beiden um den Mittelpunkt der Reihe liegenden Rotorwicklungen) einander aufgrund ähnlich starker kapazitiver Kopplung zumindest ähnlich große Streuströme entgegengesetzter Richtung bewirken, die sich somit entsprechend zumindest teilweise gegeneinander aufheben. Somit können die mittels einer solchen kapazitiven Kopplung zwischen Rotorwicklung und Rotorkörper bzw. Rotorwelle verbundenen Nachteile weiter reduzieren werden. Ein möglicher weiterer Vorteil liegt darin, dass zudem auch eine Verbesserung der elektromagnetischen Verträglichkeit (EMV) bei einem mittels eines solchen Rotors aufgebauten Elektromotor erreicht werden kann.

Nachfolgend werden bevorzugte Ausführungsformen des Rotors und deren Weiterbildungen beschrieben, die jeweils, soweit dies nicht ausdrücklich ausgeschlossen wird, beliebig miteinander sowie mit den im Weiteren beschriebenen anderen Aspekten der Erfindung kombiniert werden können.

Gemäß einer ersten bevorzugten Ausführungsform des Rotors sind im Rahmen der Reihenschaltung der erste Abschnitt und der zweite Abschnitt an einem Verbindungspunkt so verschaltet, dass die beiden direkt aufeinanderfolgenden und über den Verbindungspunkt hinweg verschalteten Rotorwicklungen jeweils von einem von an der Außenseite ihrer jeweiligen Wicklung liegenden Wicklungsabschnitt aus mit dem Verbindungspunkt verschaltet sind. Auf diese Weise ist eine sich über sämtliche der Rotorwicklungen beziehende symmetrische Ausführung der Rotorwicklungen gegeben, die insbesondere bei einem entsprechend symmetrisch aufgebauten Rotorkörper zur oben beschriebenen Reduktion von Streuströmen im Rotorkörper und insbesondere in der Rotorwelle verwendet werden kann.

Gemäß einer dazu alternativen weiteren bevorzugten Ausführungsform sind im Rahmen der Reihenschaltung der erste Abschnitt und der zweite Abschnitt an einem Verbindungspunkt so verschaltet, dass die beiden direkt aufeinanderfolgenden und über den Verbindungspunkt hinweg verschalteten Rotorwicklungen jeweils von einem von an der Innenseite ihrer jeweiligen Wicklung liegenden Wicklungsabschnitt aus mit dem Verbindungspunkt verschaltet sind. Zunächst ergeben sich damit die bereits im Zusammenhang mit der ersten bevorzugten Ausführung von genannten Vorteile ebenfalls. Als weiterer Vorteil kommt hinzu, dass hier die beiden von den Anschlüssen des Rotors aus als erste angeordneten Rotorwicklungen (nachfolgende: "äußerste Rotorwicklungen"), an denen das höchste bzw. das niedrigste Spannungspotenzial und somit auch die höchste kapazitive Kopplung in der ganzen Reihe auftritt, jeweils einen Stromfluss in radialer Richtung von der schwächer koppelnden Außenseite zur Innenseite der Rotorwicklung hin aufweisen, so dass sich insgesamt eine schwächere Kapazitive Kopplung zum Rotorkörper und zur Welle ergibt. Entsprechendes gilt auch, wenngleich aufgrund der geringeren Spannungspotentiale in abgeschwächter Form, für die weiteren in der Reihenschaltung zwischen den beiden äußersten Rotorwicklungen.

Gemäß einer weiteren bevorzugten Ausführungsform sind die Rotorwicklungen und die Reihenschaltung in solcher Weise symmetrisch ausgeführt, dass die elektrische Streukapazität des ersten Abschnitts zum Rotorkörper, zumindest im Wesentlichen, der elektrischen Streukapazität des zweiten Abschnitts zum Rotorkörper entspricht. Gemäß einer bevorzugten Weiterbildung dazu beträgt die Differenz zwischen den elektrischen Streukapazitäten des ersten Abschnitts und des zweiten Abschnitts, jeweils zum Rotorkörper, nicht mehr als 10%, bevorzugt 5%, besonders bevorzugt 2% der resultierenden Streukapazität der gesamten zwischen den Anschlüssen des Rotors verlaufenden Reihenschaltung der n Rotorwicklungen zum Rotorkörper. Somit ist es bei dieser Ausführungsform möglich, die kapazitive Kopplung bzw. die dadurch bewirkten Streuströme im Rotorkörper und insbesondere der Rotorwelle weiter zu reduzieren, insbesondere zumindest annähernd auf ein Minimum zu senken. Bei der Implementierung dieser Ausführungsform kann es vorteilhaft sein, zusätzlich die (insbesondere magnetischen) Materialeigenschaften, sowie die geometrische Ausführung der einzelnen Rotorwicklungen sowie des Rotorkörpers selbst so aufeinander abzustimmen, dass die gewünschte Symmetrisierung, zumindest weitgehend, erreicht wird.

Ein zweiter Aspekt der Erfindung betrifft eine Rotorschaltung für einen fremderregten Synchronmotor. Die Rotorschaltung weist einen Rotor gemäß dem ersten Aspekt der Erfindung, bevorzugt gemäß einer oder mehrerer seiner hierin dargestellten bevorzugten Ausführungsformen, auf. Des Weiteren weist die Rotorschaltung eine erste Versorgungsleitung zur Verbindung eines ersten Pols einer Gleichspannungsversorgung mit dem ersten der Anschlüsse des Rotors und eine zweite Versorgungsleitung zur Verbindung eines zweiten entgegengesetzten zweiten Pols der Gleichspannungsversorgung mit dem zweiten der Anschlüsse des Rotors auf. Zudem ist ein zwischen die erste und die zweite Versorgungsleitung geschalteter kapazitiver Spannungsteiler mit einer ersten Y-Kapazität zwischen der ersten Versorgungsleitung und einer elektrisch leitenden Verbindung zu dem Rotorkörper und einer zweiten Y-Kapazität zwischen dieser Verbindung und der zweiten Versorgungsleitung vorgesehen.

Auf diese Weise kann der Rotorkörper über die Y-Kapazitäten sowie mangels einer anderweitigen direkten Verbindung zu der über die beiden Versorgungsleitungen dem Rotor zugeführte Versorgungsspannung galvanisch von der Versorgungsspannung entkoppelt ausgeführt werden. Bevorzugt sind dabei gemäß einer Weiterbildung die Y-Kapazitäten für die beiden Versorgungsleitungen, zumindest in etwa, gleich groß gewählt. So kann sich das Potenzial der Verbindungsleitung, die insbesondere eine schwebende Masse (z.B. FahrzeugChassis) darstellen kann, zumindest näherungsweise in der Mitte zwischen den Potenzialen der beiden Versorgungsleitungen einstellen. Bei der erfindungsgemäßen Ausführung des Rotors führt die damit einhergehende Verringerung der kapazitiven Kopplung zu einer Stabilisierung dieser schwebenden Masse, die umso robuster ausfällt, je symmetrischer der Aufbau des Rotors bezüglich der kapazitiven Kopplung seiner einzelnen Rotorwicklungen auf den Rotorkörper gestaltet ist. Dies ist insbesondere vor dem Hintergrund von Bedeutung, dass bei Elektrofahrzeugen typischerweise keiner der beiden Pole der Fahrzeugbatterie mit Masse, d.h. mit dem Chassis des Fahrzeugs, galvanisch verbunden ist. Somit kommt einer Stabilisierung der schwebend ausgeführten Masse eine besondere Bedeutung zu, die sich wie dargestellt mit der Erfindung bewerkstelligen lässt.

Gemäß einer bevorzugten Ausführungsform der Rotorschaltung weist die erste Versorgungsleitung einen ersten steuerbaren Widerstand und die zweite Versorgungsleitung einen zweiten steuerbaren Widerstand auf. Zwischen den ersten und den zweiten steuerbaren Widerstand und parallel zu den Anschlüssen der Rotorwicklung ist zudem eine Freilaufdiode für die Rotorwicklung geschaltet. Bevorzugt die steuerbaren Widerstände jeweils als Transistoren, bevorzugt als Leistungstransistoren, wie etwa Leistung-MOSFETs oder IGBTs, ausgebildet. Mithilfe dieser steuerbaren Widerstände kann die zum Betrieb eines den Rotor enthaltenden Elektromotors erforderliche Magnetisierung des Motors über den Stromfluss durch die Rotorwicklungen gesteuert bzw. geregelt werden, insbesondere um eine Anpassung an eine Belastung des Motors zu erreichen. Eine solche Steuerung oder Regelung wird bevorzugt mittels einer sogenannten Pulsweitenmodulation (PWM) durchgeführt, bei der einer über die Versorgungsleitungen zugeführten Gleichspannungsversorgung des Rotors mittels der steuerbaren Widerstände eine pulsweitenmodulierte Wechselspannung aufgeprägt wird. Dazu wird bevorzugt bei konstanter Frequenz der Tastgrad eines Rechteckpulses, also die Breite der ihn bildenden Pulse, moduliert. Der Strom und damit das Drehmoment und somit die Leistung des Motors können auf diese Weise entsprechend mittels Variation der bei der Modulation erzeugten Pulsbreiten gesteuert bzw. geregelt werden. Gemäß einer bevorzugten Weiterbildung weist die Rotorschaltung zu diesem Zweck des Weiteren eine Steuervorrichtung zur Ansteuerung der steuerbaren Widerstände mittels eines PWM-modulierten Steuersignals auf.

Ein dritter Aspekt der Erfindung betrifft einen fremderregten Synchronmotor, insbesondere einen Traktionsmotor für ein elektrisch antreibbares Fahrzeug. Der Synchronmotor weist einen Rotor gemäß im ersten Aspekt der Erfindung auf, bevorzugt gemäß einer seiner hierin beschriebenen Ausführungsformen, sowie einen zugeordneten Stator zur Erzeugung einer elektromotorischen Wirkung im Zusammenspiel zwischen dem Stator und dem Rotor. Auf diese Weise lassen sich insbesondere die EMV und aufgrund der Reduktion bzw. Vermeidung von Schädigungen der Rotorwelle und ihrer Lager die Lebensdauer des Fahrzeugantriebs verbessern.

Gemäß einer bevorzugten Ausführungsform weist der Synchronmotor eine Rotorschaltung gemäß dem zweiten Aspekt der Erfindung auf. Dies ermöglicht, wie bereits vorausgehend im Zusammenhang mit der Beschreibung der Rotorschaltung dargestellt, insbesondere eine Steuerung bzw. Regelung der Motorleistung, sowie eine Stabilisierung der schwebenden Masse, die sich bei Drehung des Rotors aufgrund der Isolationswirkung der Lager, insbesondere zwischen den Potentialen der beiden Rotoranschlüsse bzw. den Potentialen einer entsprechenden Versorgungsspannung liegend, ergibt.

Das vorausgehend jeweils für den Rotor gemäß dem ersten Aspekt der Erfindung und insbesondere seine hierin beschriebenen Ausführungsformen und Weiterbildungen Gesagte trifft gleichermaßen auf die Rotorschaltung sowie den Synchronmotor, die jeweils einen solchen Rotor aufweisen, zu.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** einen Rotor gemäß dem Stand der Technik mit beispielhaft sechs Rotorwicklungen;
**Fig. 2** schematisch eine Detailansicht der Rotorwicklungen des Rotors aus Fig. 1 und deren Reihenschaltung;
**Fig. 3** einen Rotor mit beispielhaft sechs Rotorwicklungen sowie sein Ersatzschaltbild, gemäß einer ersten bevorzugten Ausführungsform der Erfindung;
**Fig. 4** schematisch eine Detailansicht der Rotorwicklungen des Rotors aus Fig. 3 und deren Reihenschaltung;
**Fig. 5** einen Rotor mit beispielhaft sechs Rotorwicklungen sowie sein Ersatzschaltbild, gemäß einer zweiten bevorzugten Ausführungsform der Erfindung;
**Fig. 6** schematisch eine Detailansicht der Rotorwicklungen des Rotors aus Fig. 5 und deren Reihenschaltung;
**Fig. 7** eine Rotorschaltung zur Ansteuerung eines erfindungsgemäßen Rotors, hier am Beispiel des Rotors aus Fig. 5 bzw. Fig. 6, gemäß einer bevorzugten Ausführungsform der Erfindung;
**Fig. 8** schematisch eine Antriebsvorrichtung mit einem fremderregten Synchronmotor einschließlich einer Rotorschaltung gemäß Fig. 7, gemäß einer bevorzugten Ausführungsform der Erfindung.

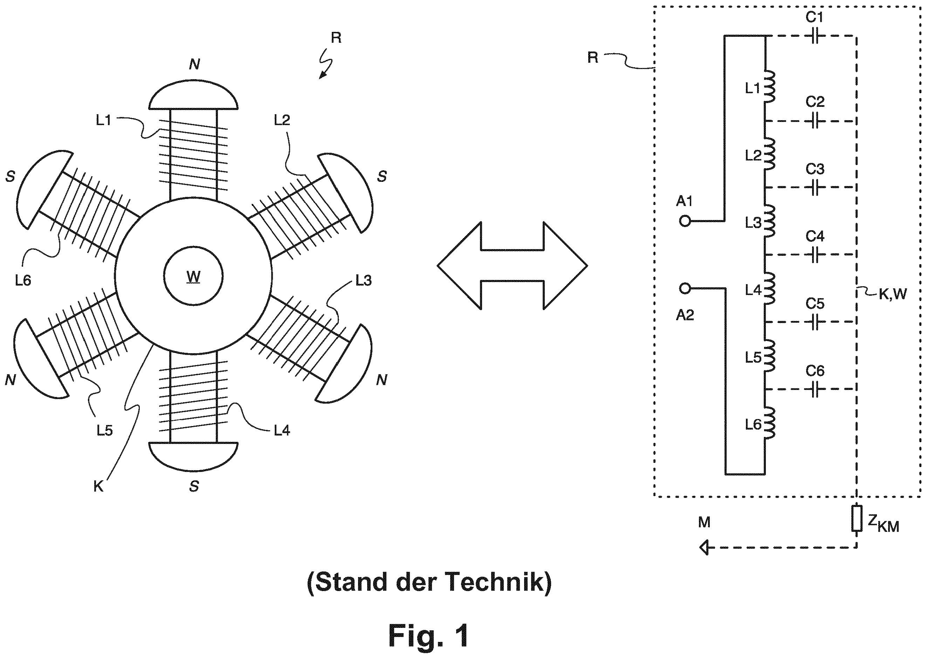

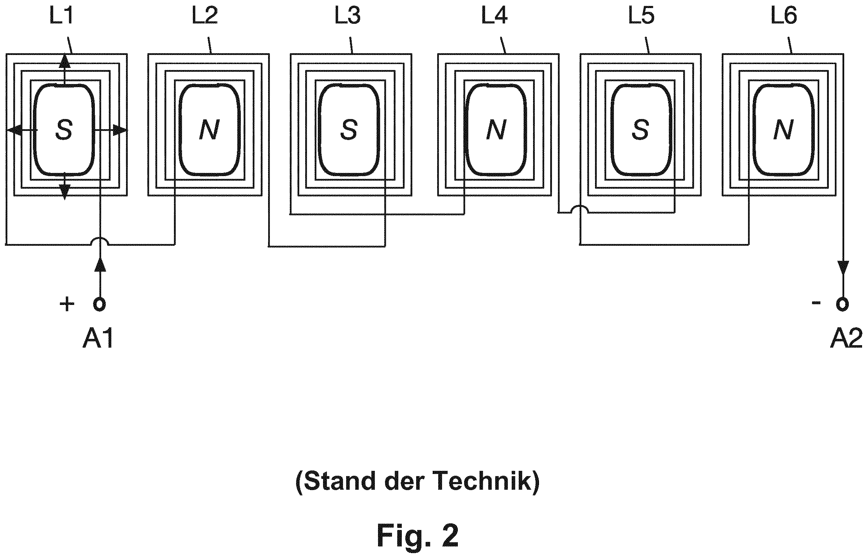

In den nachfolgenden Figuren, werden durchgängig dieselben Bezugszeichen für dieselben oder einander entsprechende Elemente der Erfindung verwendet. Zunächst wird zur Erläuterung des Standes der Technik, von dem die vorliegende Erfindung ausgeht, unter Bezugnahme auf die **Figuren 1** **und** **2** ein Rotor R gemäß dem Stand der Technik beschrieben. Auf der linken Seite von **Fig. 1** ist ein solcher Rotor R, der beispielhaft n = 6 Pole aufweist, schematisch dargestellt. Der Rotor R weist einen Rotorkörper K auf, der bezüglich einer fest mit dem Rotorkörper K verbundenen Rotorwelle W rotationssymmetrisch aufgebaut ist und mittels der Rotorwelle W um diese drehbar gelagert werden kann. Der Rotor weist sechs gleichmäßig entlang des Umfangs verteilte sich in radialer Richtung erstreckende Anker auf, die aus einem ferromagnetischem Material (bevorzugt aus parallelen voneinander isolierten eisenhaltigen Blechen) gefertigt sind. Um die Anker ist jeweils eine Rotorwicklung L1 bis L6 gewickelt, sodass die Rotorwicklungen jeweils einen Elektromagnet mit dem jeweiligen Anker als Kern darstellen und dementsprechend jeweils einen magnetischen Pol bilden. Die einzelnen Rotorwicklungen L1 bis L6 sind in Reihe geschaltet. Dabei sind sie bezüglich ihres Windungssinns so ausgeführt, dass sich entlang des Umfangs des Rotors an seiner Außenseite abwechselnd magnetische Nordpole *N* und magnetische Südpole *S* ausbilden, wenn der Rotor mit einer Versorgungsspannung versorgt wird.

Auf der rechten Seite von **Fig. 1** ist ein Ersatzschaltbild des Rotors R dargestellt. Die tatsächliche Schaltung ist mittels durchgezogener Linien dargestellt, und zeigt die zwischen zwei Anschlüssen A1 und A2 des Rotors R angeordnete Reihenschaltung der Rotorwicklungen L1 bis L6. Zwischen den Rotorwicklungen und dem Rotorkörper K, insbesondere auch der mit ihm leitend verbundenen Rotorwelle W, besteht eine kapazitive Kopplung, die hier auf dem Wege eines Ersatzschaltbilds anhand der Streukapazitäten C1 bis C6 und anhand gestrichelter Linien dargestellt ist. Der Rotorkörper K ist über die Rotorwelle W und ihre Lager mit einer Masseleitung M über einen dabei in der Praxis auftretenden elektrischen Widerstand (Impedanz) Z_{KM} elektrisch leitend verbunden, so dass Ströme, die etwa bei einem Aufladen der Streukapazitäten C1 bis C6 oder bei einer über sie vermittelten Wechselstromkopplung von der Reihenschaltung der Rotorwicklungen L1 bis L6 auf den Rotorkörper K bzw. die Rotorwelle W gekoppelt werden, über den Widerstand Z_{KM} zur Masse M hin abfließen können. Insbesondere können die Lager beim Rotieren des Rotors im Betrieb eine Isolierung der Lagerschalen herstellen (der in den Lagern typischerweise ausgebildete Schmierfilm eines Schmiermittels isoliert). Deshalb wird bevorzugt das Lager mit einem sogenannten Wellenerdungsring ausgestattet, der auch während die Welle dreht eine niederimpedante elektrische Verbindung von der Rotorwelle zum Gehäuse herstellt.

Zur genaueren Erläuterung der Streukapazitäten C1 bis C6 und ihrer Lage in dem Ersatzschaltbild wird nun zusätzlich auf **Fig. 2** Bezug genommen. Dort ist schematisch in größerem Detail nochmals die Reihenschaltung der einzelnen Rotorwicklungen L1 bis L6 dargestellt. Wenn zwischen den beiden Rotoranschlüssen A1 und A2 eine Gleichspannung mit der gezeigten Polarität (+/-) angelegt wird, ergibt sich ein Stromfluss durch die Reihenschaltung von dem Anschluss A1 zur ersten Rotorwicklung L1 und alle nachfolgenden Rotorwicklungen L2 bis L6 und schließlich zum zweiten Anschluss A2. Dies ist durch kleine Pfeile angedeutet. Die einzelnen Rotorwicklungen L1 bis L6, sowie deren Verschaltung im Rahmen der Reihenschaltung sind dabei jeweils so ausgeführt, dass der Stromfluss stets an der bezogen auf den Kern der Rotorwicklung innersten Lage der Rotorwicklung in diese eintritt und an ihrer Außenseite wieder austritt, sodass sich in radialer Richtung (in der Rotorwicklung L1 durch von der Innenseite der Wicklung zu ihrer Außenseite gerichtete Pfeile gekennzeichnet) ein Nettostromfluss von innen nach außen, d.h. von der an den Rotorkörper K bzw. Kern anschließenden Innenseite zur Außenseite der Rotorwicklung hin, ergibt. Aufgrund der Entfernungsabhängigkeit der Streukapazitäten C1 bis C6 und der zunehmenden Entfernung zwischen dem Rotationskörper K bzw. Kern und den einzelnen Lagen der Rotorwicklung, tragen im Wesentlichen nur die inneren Lagen der Rotorwicklung zur Streukapazität bei, wobei sie gemäß der vorliegenden Reihenschaltung auf einem höheren elektrischen Spannungspotenzial liegen, als die weiter außen und bezogen auf die Stromrichtung stromabwärts liegenden Lagen der Rotorwicklung. So erklärt sich auch das Ersatzschaltbild auf der rechten Seite von Fig. 1, wo die Streukapazitäten C1 bis C6 jeweils an dem bezogen auf die Stromrichtung stromaufwärts liegenden Ende der jeweiligen Rotorwicklungen L1 bis L6 ansetzen. Wie man erkennt, sind der Rotor R bzw. seine Reihenschaltung der Rotorwicklungen L1 bis L6 somit bezogen auf die Lage der zugeordneten Streukapazitäten C1 bis C6 asymmetrisch aufgebaut. Insgesamt ergibt sich damit eine signifikante kapazitive Kopplung zwischen der Reihenschaltung der Rotorwicklungen L1 bis L6 und dem Rotorkörper K bzw. seiner Rotorwelle W.

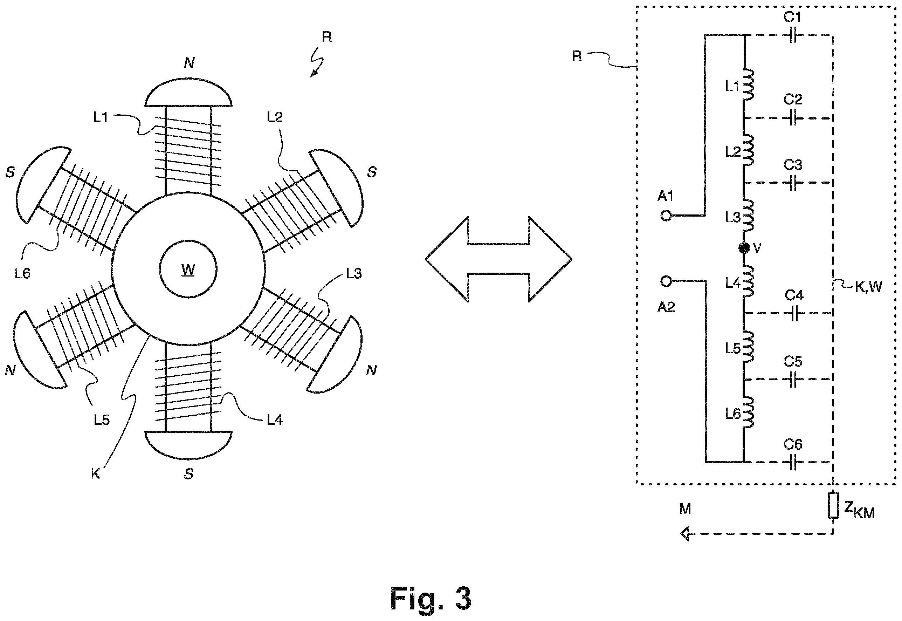

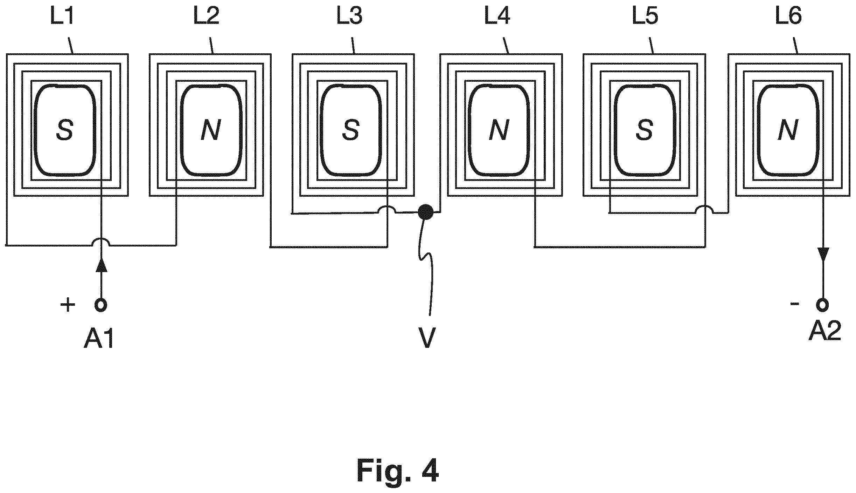

In den **Figuren 3** **und** **4** ist im Gegensatz dazu eine erste bevorzugte Ausführungsform eines Rotors R gemäß der vorliegenden Erfindung auf gleiche Weise dargestellt. Der Rotor R unterscheidet sich von dem in den Figuren 1 und 2 beschriebenen dadurch, dass wie in **Fig. 4** und dem dazu korrespondierenden Ersatzschaltbild auf der rechten Seite von **Fig. 3** gezeigt, die Reihenschaltung der Rotorwicklungen L1 bis L6 auf eine andere Weise ausgeführt ist. Während nämlich bei den vom positiven ersten Anschluss A1 ausgehend ersten n/2 = 6/2 = 3 Rotorwicklungen L1 bis L3 (erster Abschnitt der Reihenschaltung) der durch die Reihenschaltung fließende Strom jeweils an der Innenseite der Rotorwicklung in diese eintritt und somit einen Nettostromfluss in radialer Richtung von innen nach außen aufweist, ist dies bei den zweiten n/2 = 3 Rotorwicklungen L4 bis L6 (zweiter Abschnitt der Reihenschaltung) andersherum, sodass dort der Strom an der kernfernen Außenseite in die jeweilige Rotorwicklung eintritt und an der jeweiligen kernnahmen Innenseite austritt. Die beiden Abschnitte der Reihenschaltung sind an einem Verbindungspunkt V im Rahmen der Reihenschaltung miteinander elektrisch leitend verbunden. Es ergibt sich folglich das auf der rechten Seite von Fig. 3 dargestellte Ersatzschaltbild, bei dem die Streukapazitäten C1 bis C6 bezogen auf die beiden von den Anschlüssen A1 und A2 ausgehenden Seiten bzw. Abschnitte der Reihenschaltung symmetrisch um den Verbindungspunkt V angeordnet sind. Diese Symmetrisierung bewirkt, dass wenn das Potential der Masse M zwischen dem der Anschlüsse A1 und A2 liegt, sich die über die Streukapazität vermittelten, paarweise für die Paare C1/C6, C2/C5 und C3/C4 gegenläufigen und zur Masse M abfließenden Streuströme im Rotorkörper K bzw. der Rotorwelle W, zumindest anteilig, gegenseitig aufheben können. So wird insgesamt eine Reduktion und im Idealfall sogar eine weitgehende Vermeidung der unerwünschten Streuströme ermöglicht.

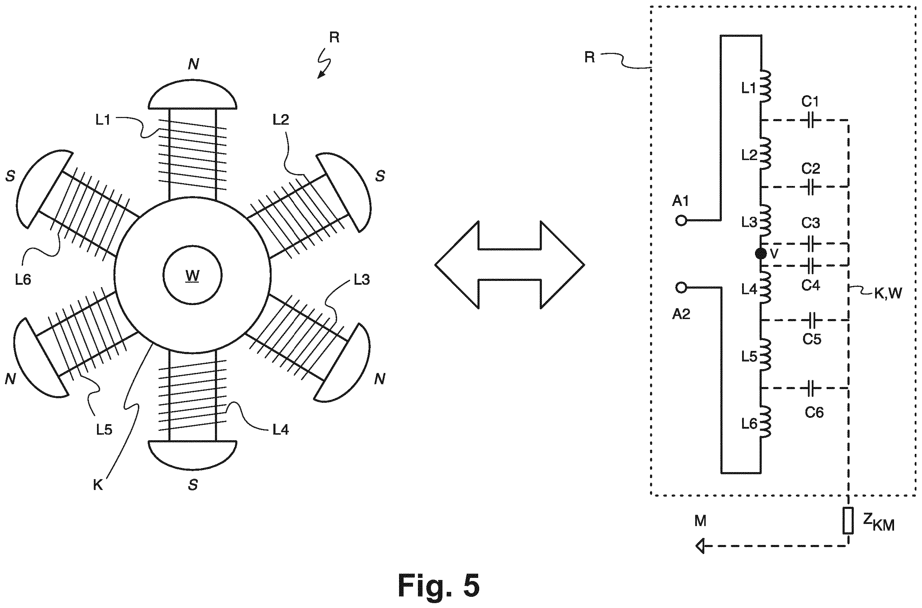

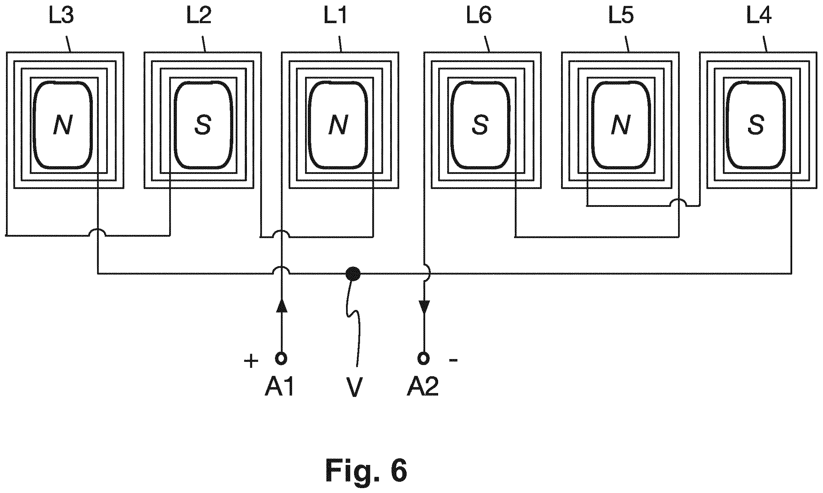

In den **Figuren 5** **und** **6** ist eine zweite bevorzugte Ausführungsform eines Rotors R gemäß der vorliegenden Erfindung auf gleiche Weise dargestellt. Der Rotor R unterscheidet sich von dem in den Figuren 3 und 4 beschriebenen dadurch, dass hier vom positiven ersten Anschluss A1 ausgehend in den ersten n/2 = 6/2 = 3 Rotorwicklungen L1 bis L3 des ersten Abschnitts der Reihenschaltung der durch die Reihenschaltung fließende Strom jeweils an der Außenseite der Rotorwicklung in diese eintritt und somit einen Nettostromfluss in radialer Richtung von außen nach innen aufweist. Bei den zweiten n/2 = 3 Rotorwicklungen L4 bis L6 (zweiter Abschnitt der Reihenschaltung) ist dies dagegen andersherum, sodass dort der Strom an der kernnahen Innenseite in die jeweilige Rotorwicklung eintritt und an der jeweiligen kernfernen Außenseite austritt. Wieder ergibt sich eine Symmetrie mit den bereits im Zusammenhang mit der in den Figuren 3 und 4 gezeigten ersten Ausführungsform beschriebenen Vorteilen. Als zusätzlicher Vorteil ergibt sich hier, dass die Streukapazitäten C1 bis C6 bezogen auf die Stromrichtung erst stromabwärts von den jeweils korrespondierenden Rotorwicklungen L1 bis L6 ansetzen, und sie somit mit einem geringeren Spannungspotenzial beaufschlagt werden, was zu einer weiteren Verringerung der kapazitiven Kopplung führt. So können vorteilhaft gegebenenfalls verbleibende, sich nicht gegenseitig aufhebende Streustromanteile im Rotorkörper K bzw. der Rotorwelle W in der Regel geringer ausfallen als bei der Ausführungsform gemäß den Figuren 3 und 4.

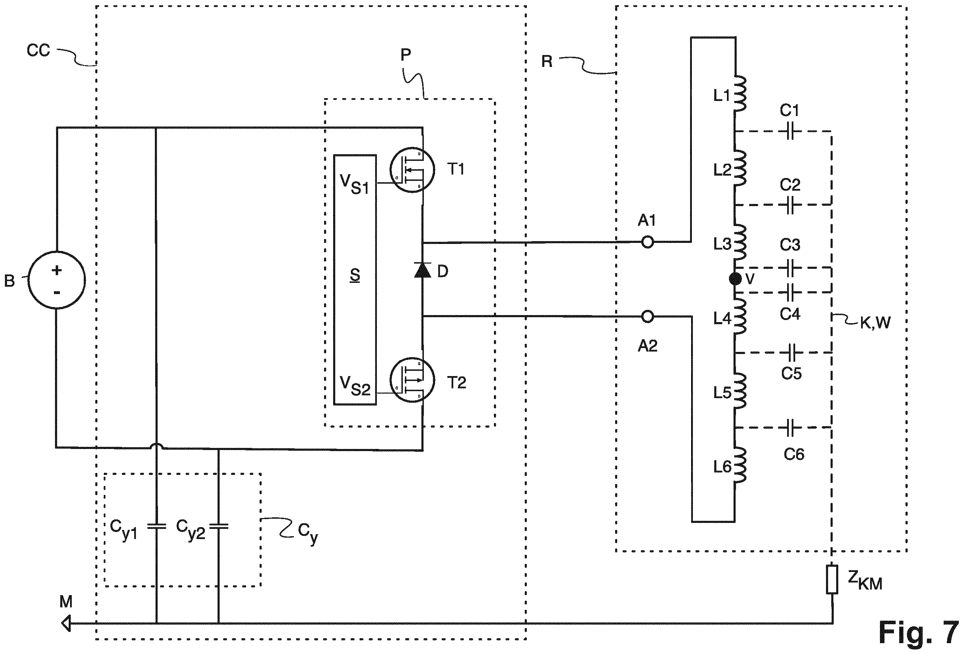

In **Fig. 7** ist eine Rotorschaltung gemäß einer bevorzugten Ausführungsform der Erfindung zur Ansteuerung eines erfindungsgemäßen Rotors, hier am Beispiel des Rotors aus Fig. 5 bzw. Fig. 6, dargestellt. Die Rotorschaltung weist neben dem Rotor R selbst eine zu seiner Ansteuerung vorgesehene Steuerschaltung CC auf, die über die beiden Anschlüsse A1 und A2 des Rotors R mit diesem zu seiner Ansteuerung elektrisch verbunden ist.

Die Steuerschaltung CC enthält eine Leistungsstufe P zur Versorgung des Rotors R mit einer von einer Gleichstromversorgung B, insbesondere von einer Batterie, bereitgestellten Versorgungsgleichspannung, deren Höhe und zeitlicher Verlauf mittels der Leistungsstufe P steuerbar ist. Dazu weist die Leistungsstufe P2 über zumindest eine in Sperrrichtung geschaltete Freilaufdiode D und in Serie geschaltete steuerbare Widerstände T1 und T2 auf, die insbesondere jeweils als Transistor, bevorzugt als Leistung-MOSFET ausgebildet sind. Die beiden steuerbaren Widerstände T1 und T2 können dazu jeweils über eine entsprechende Steuerspannung V_{S1} bzw. V_{S2} einzeln von einer Steuervorrichtung S, insbesondere einer Steuerlogik, angesteuert werden, die bevorzugt ebenfalls Teil der Steuerschaltung CC ist. Die Steuervorrichtung S kann insbesondere konfiguriert sein, dem Stromfluss durch die Versorgungsleitungen und somit die Rotorwicklungen mittels der steuerbaren Widerstände T1 und/oder T2 ein pulsweitenmoduliertes Wechselstromsignal (PWM-Signal) aufzuprägen, was vor allem dazu genutzt werden kann, die Leistung bzw. das Drehmoment des Elektromotors über eine Variation der Pulsweiten bzw. gleichbedeutend des Tastgrades zu steuern. Die Freilaufdiode D dient dazu, beim Abschalten der Transistoren T1 und T2 den Momentanstrom weiterfließen zu lassen bis die Transistoren wieder einschalten (PWM) oder beim Ausschalten der Spannungsversorgung die im Rotor R, insbesondere in den Magnetfeldern seiner Rotorwicklungen L1 bis L6 gespeicherte Energie, durch einen entsprechenden Stromfluss durch die dann in Vorwärtsrichtung betriebenen Freilaufdiode D abzubauen.

Des Weiteren weist die Steuerschaltung CC einen Satz C_{Y} von als kapazitiven Spannungsteiler geschalteten Y-Kapazitäten C_{Y1} und C_{Y2} auf, die jeweils zwischen der Masse und einer der beiden von der Gleichspannungsversorgung B kommenden Versorgungsleitungen so geschaltet sind, dass die Masse M als schwebende Masse über diese Y-Kapazitäten C_{Y1} und C_{Y2} mit der Spannungsversorgung B gekoppelt ist und sich an ihr ein Spannungspotenzial ausbildet, das zwischen den Potenzialen des Pluspols und des Minuspols der Gleichspannungsversorgung B liegt. Diese Art eines Stromversorgungsnetzes wird oftmals auch als "IT-Netz" bezeichnet und kommt regelmäßig insbesondere in Elektrofahrzeugen zum Einsatz. Idealerweise sind die Y-Kapazitäten C_{Y1} und C_{Y2} so gewählt, insbesondere durch Wahl gleicher Kapazitätsgrößen, dass das Potenzial der Masse M, zumindest im Wesentlichen, in der Mitte zwischen den Potenzialen des Pluspols und des Minuspols der Gleichspannungsversorgung B liegt. Mittels dieser Rotorschaltung, die gleichermaßen auch mit anderen Ausführungsformen des Rotors R, insbesondere auch mit der in den Figuren 3 und 4 dargestellten Ausführungsform, verwendet werden kann, ist es insbesondere möglich, das Potenzial der Masse M als schwebende Masse zu stabilisieren, da die ihr Potenzial beeinflussenden Streuspannungen, welche über die Streukapazitäten C1 bis C6 und den Widerstand Z_{KM} auf sie gekoppelt werden könnten, reduziert oder gar weitgehend vermieden werden können. So können zudem die elektromagnetische Verträglichkeit (EMV) der Rotorschaltung und somit auch eines entsprechenden Elektromotors und eines mit einem solchen Elektromotor ausgerüsteten Fahrzeugs verbessert werden.

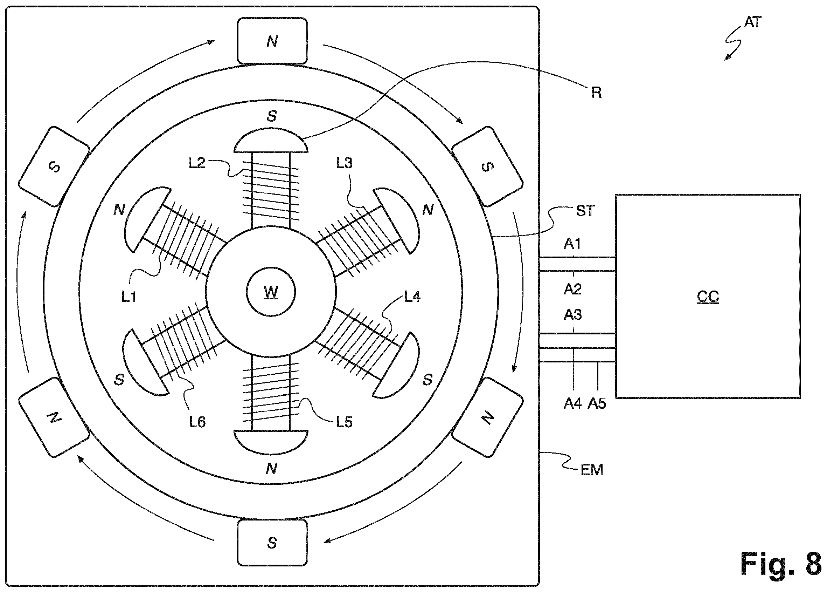

**Fig. 8** zeigt schließlich noch schematisch eine Antriebsvorrichtung AT mit einem Elektromotor EM, speziell einem fremderregten Synchronmotor, einschließlich einer Rotorschaltung gemäß Fig. 7. Die Masse M ist hier zur Vereinfachung der Darstellung nicht eingezeichnet. Der Elektromotor EM weist neben dem Rotor R einen in umgebenden Stator ST mit entsprechenden Feldspulen auf, denen von der Steuerschaltung CC über weitere Anschlüsse A3, A4 und A5 eine Drehstrom-Versorgungsspannung zugeführt wird, die so konfiguriert ist, dass der Stator mithilfe seiner Feldspulen ein in Pfeilrichtung umlaufendes Magnetfeld ausbildet, dem der um seine Welle W drehbar gelagerte Rotor R folgt (im Normalbetrieb synchron).

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zu Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- AT: Antriebsvorrichtung
- EM: Elektromotor, speziell fremderregter Synchronmotor
- R: Rotor
- ST: Stator
- L1... L6: Rotorwicklungen bzw. Feldspulen des Rotors
- C1... C6: Streukapazitäten der Rotorwicklungen bzw. Feldspulen
- n: Anzahl Pole der Reihenschaltung aus den Rotorwicklungen
- V: Verbindungspunkt der beiden Abschnitte der Reihenschaltung
- K: Rotorkörper
- W: Rotorwelle
- A1, A2: elektrische Anschlüsse des Rotors, d.h. seiner Rotorwicklungen
- A3, A4, A5: elektrische Anschlüsse des Stators, d.h. seiner Feldspulenwicklungen
- *N*: magnetischer Nordpol
- *S*: magnetischer Südpol

- M: schwebende Masse, z.B. zugleich Chassis eines Fahrzeugs
- B: Gleichspannungsversorgung, insbesondere Batterie
- Z_{KM}: Gesamtwiderstand (Impedanz) zwischen Rotorkörper/Welle und M
- CC: Steuerschaltung
- P: Leistungsstufe
- S: Steuervorrichtung
- T1, T2: steuerbare Widerstände, insbesondere Transistoren
- V_{S1}, V_{S2}: Steuerspannungen für T1, T2
- D: (Freilauf-)Diode
- C_{y}: Satz von Y-Kapazitäten, kapazitiver Spannungsteiler
- C_{y1}, C_{y2}: Y-Kapazitäten von C_{y}

## Patentansprüche

1. Rotor (R) für einen Elektromotor (EM), insbesondere einen fremderregten Synchronmotor, aufweisend
einen Rotorkörper (K); und
eine gerade Anzahl n von an dem Rotorkörper (K) angeordneten Polen mit jeweils einer Rotorwicklung (L1,...,L6), wobei die Rotorwicklungen der Pole zwischen zwei zur Zuleitung bzw. Ableitung eines elektrischen Erregerstroms durch die Rotorwicklungen dienenden elektrischen Anschlüssen (A1, A2) des Rotors (R) in Reihe geschaltet sind;
wobei die Reihenschaltung einen ersten Abschnitt aufweist, zu dem die von einem ersten der Anschlüsse aus in der Reihenschaltung zuerst angeordneten n/2 Rotorwicklungen (L1,...,L3) gehören, und einen zweiten Abschnitt, zu dem die in der Reihenschaltung verbleibenden weiteren vor dem zweiten der Anschlüsse angeordneten n/2 Rotorwicklungen (L4,...,L6) gehören;
**dadurch gekennzeichnet, dass**
die Rotorwicklungen (L1,...,L6) und die Reihenschaltung in solcher Weise ausgeführt sind, dass bei Anlegen einer Gleichspannung zwischen den beiden Anschlüssen (A1, A2) in jeder der Rotorwicklungen des ersten Abschnitts die in Richtung der Wickelhöhe der jeweiligen Rotorwicklung ausgerichtete Radialkomponente des in der Reihenschaltung auftretenden Gleichstromflusses durch die jeweilige Rotorwicklung (L1,...,L3) insgesamt von einer Innenseite zu einer Außenseite der Rotorwicklung (L1,...,L3) verläuft und in jeder der Rotorwicklungen (L4,...,L6) des zweiten Abschnitts umgekehrt insgesamt von einer Außenseite zu einer Innenseite der Rotorwicklung (L4,...,L6).

2. Rotor (R) gemäß Anspruch 1, wobei im Rahmen der Reihenschaltung der erste Abschnitt und der zweite Abschnitt an einem Verbindungspunkt (V) so verschaltet sind, dass die beiden direkt aufeinanderfolgenden und über den Verbindungspunkt (V) hinweg verschalteten Rotorwicklungen (L3, L4) jeweils von einem von an der Außenseite ihrer jeweiligen Wicklung liegenden Wicklungsabschnitt aus mit dem Verbindungspunkt (V) verschaltet sind.

3. Rotor (R) gemäß Anspruch 1, wobei im Rahmen der Reihenschaltung der erste Abschnitt und der zweite Abschnitt an einem Verbindungspunkt (V) so verschaltet sind, dass die beiden direkt aufeinanderfolgenden und über den Verbindungspunkt (V) hinweg verschalteten Rotorwicklungen (L3, L4) jeweils von einem von an der Innenseite ihrer jeweiligen Wicklung liegenden Wicklungsabschnitt aus mit dem Verbindungspunkt (V) verschaltet sind.

4. Rotor (R) gemäß einem der vorausgehenden Ansprüche, wobei die Rotorwicklungen (L1,...,L6) und die Reihenschaltung in solcher Weise symmetrisch ausgeführt sind, dass die elektrische Streukapazität (C1 bis C3) des ersten Abschnitts zum Rotorkörper (K), zumindest im Wesentlichen, der elektrischen Streukapazität (C4 bis C6) des zweiten Abschnitts zum Rotorkörper (K) des Rotors entspricht.

5. Rotor (R) gemäß Anspruch 4, wobei die Rotorwicklungen (L1,...,L6) und die Reihenschaltung in solcher Weise symmetrisch ausgeführt sind, dass die Differenz zwischen den elektrischen Streukapazitäten (C1 bis C3) des ersten Abschnitts und den elektrischen Streukapazitäten (C4 bis C6) des zweiten Abschnitts, jeweils zum Rotorkörper, nicht mehr als 10%, bevorzugt 5%, besonders bevorzugt 2% der resultierenden Streukapazität der gesamten zwischen den Anschlüssen des Rotors verlaufenden Reihenschaltung der n Rotorwicklungen (L1,...,L6) zum Rotorkörper (K) beträgt.

6. Rotorschaltung für einen fremderregten Synchronmotor; aufweisend:
einen Rotor (R) gemäß einem der vorausgehenden Ansprüche;
eine erste Versorgungsleitung zur Verbindung eines ersten Pols einer Gleichspannungsversorgung (B) mit dem ersten der Anschlüsse (A1) des Rotors (R) und eine zweite Versorgungsleitung zur Verbindung eines zweiten entgegengesetzten zweiten Pols der Gleichspannungsversorgung (B) mit dem zweiten der Anschlüsse (A2) des Rotors (R); und
einen zwischen die erste und die zweite Versorgungsleitung geschalteten kapazitiven Spannungsteiler (C_{y}) mit einer ersten Y-Kapazität (C_{y1}) zwischen der ersten Versorgungsleitung und einer elektrisch leitenden Verbindung zu dem Rotorkörper (K) und einer zweiten Y-Kapazität (C_{y2}) zwischen dieser Verbindung und der zweiten Versorgungsleitung.

7. Rotorschaltung gemäß Anspruch 6, wobei die erste Versorgungsleitung einen ersten steuerbaren Widerstand (T1) und die zweite Versorgungsleitung einen zweiten steuerbaren Widerstand (T2) aufweisen und zwischen den ersten und den zweiten steuerbaren Widerstand (T1, T2) und parallel zu den Anschlüssen (A1, A2) der Rotorwicklung (L1,...,L6) eine Freilaufdiode (D) für die Rotorwicklung (L1,...,L6) geschaltet ist.

8. Rotorschaltung gemäß Anspruch 7, des Weiteren aufweisend eine Steuervorrichtung (S) zur Ansteuerung der steuerbaren Widerstände (T1, T2) mittels eines PWM-modulierten Steuersignals.

9. Fremderregter Synchronmotor (EM), insbesondere Traktionsmotor für ein elektrisch antreibbares Fahrzeug, aufweisend einen Rotor (R) gemäß einem der Ansprüche 1 bis 5 sowie einen dem Rotor (R) zugeordneten Stator (ST) zur Erzeugung einer elektromotorischen Wirkung im Zusammenspiel zwischen dem Stator (ST) und dem Rotor (R).

10. Synchronmotor (EM) gemäß Anspruch 9, aufweisend eine Rotorschaltung gemäß einem der Ansprüche 6 bis 8.

## Claims

1. Rotor (R) for an electric motor (EM), in particular a separately excited synchronous motor, having a rotor body (K); and
an even number n of poles which are arranged on the rotor body (K) with in each case one rotor winding (L1,...,L6), the rotor windings of the poles being connected in series between two electric connectors (A1, A2) of the rotor (R) which serve to feed in and dissipate an electric field current through the rotor windings;
the series circuit having a first section, to which the n/2 rotor windings (L1,...,L3) which are arranged first of all in the series circuit from a first one of the connectors belong, and a second section, to which the further n/2 rotor windings (L4,...,L6) which remain in the series circuit and are arranged upstream of the second one of the connectors belong;
**characterized in that**
the rotor windings (L1,...,L6) and the series circuit are configured in such a way that, in the case of the application of a DC voltage between the two connectors (A1, A2), in each of the rotor windings of the first section, the radial component, oriented in the direction of the winding height of the respective rotor winding, of the direct current flow which occurs in the series circuit runs through the respective rotor winding (L1,...,L3) overall from an inner side to an outer side of the rotor winding (L1,...,L3), and, in each of the rotor windings (L4,...,L6) of the second section, runs conversely overall from an outer side to an inner side of the rotor winding (L4,...,L6).

2. Rotor (R) according to Claim 1, the first section and the second section being connected at a connecting point (V) within the context of the series circuit in such a way that the two rotor windings (L3, L4) which follow one another directly and are connected beyond the connecting point (V) are connected to the connecting point (V) in each case from a winding section which lies on the outer side of their respective winding.

3. Rotor (R) according to Claim 1, the first section and the second section being connected at a connecting point (V) within the context of the series circuit in such a way that the two rotor windings (L3, L4) which follow one another directly and are connected beyond the connecting point (V) are connected to the connecting point (V) in each case from a winding section which lies on the inner side of their respective winding.

4. Rotor (R) according to one of the preceding claims, the rotor windings (L1,...,L6) and the series circuit being of symmetrical configuration in such a way that the electric stray capacitance (C1 to C3) of the first section with respect to the rotor body (K) corresponds, at least substantially, to the electric stray capacitance (C4 to C6) of the second section with respect to the rotor body (K) of the rotor.

5. Rotor (R) according to Claim 4, the rotor windings (L1,...,L6) and the series circuit being of symmetrical configuration in such a way that the difference between the electric stray capacitances (C1 to C3) of the first section and the electric stray capacitances (C4 to C6) of the second section, in each case with respect to the rotor body, is not more than 10%, is preferably 5%, and is particularly preferably 2% of the resulting stray capacitance of the overall series connection, running between the connectors of the rotor, of the n rotor windings (L1,...,L6) with respect to the rotor body (K).

6. Rotor circuit for a separately excited synchronous motor; having:
a rotor (R) according to one of the preceding claims;
a first supply line for the connection of a first pole of a DC voltage supply (B) to the first one of the connectors (A1) of the rotor (R), and a second supply line for the connection of a second opposed second pole of the DC voltage supply (B) to the second one of the connectors (A2) of the rotor (R); and
a capacitive voltage divider (C_{y}) which is connected between the first and the second supply line with a first Y-capacitance (C_{y1}) between the first supply line and an electrically conducting connection with respect to the rotor body (K), and a second Y-capacitance (C_{y2}) between the said connection and the second supply line.

7. Rotor circuit according to Claim 6, the first supply line having a first controllable resistor (T1), and the second supply line having a second controllable resistor (T2), and a freewheeling diode (D) for the rotor winding (L1,...,L6) being connected between the first and the second controllable resistor (T1, T2) and parallel to the connectors (A1, A2) of the rotor winding (L1,...,L6).

8. Rotor circuit according to Claim 7, having, furthermore, a control apparatus (S) for the actuation of the controllable resistors (T1, T2) by means of a pulse-width modulated control signal.

9. Separately excited synchronous motor (EM), in particular traction motor for a vehicle which can be driven electrically, having a rotor (R) according to one of Claims 1 to 5, and a stator (ST) which is assigned to the rotor (R) for the generation of an electric motor effect in interaction between the stator (ST) and the rotor (R).

10. Synchronous motor (EM) according to Claim 9, having a rotor circuit according to one of Claims 6 to 8.

## Revendications

1. Rotor (R) pour un moteur électrique (E), notamment un moteur synchrone à excitation externe, comprenant un corps de rotor (K) ; et
un nombre pair n de pôles disposés sur le corps de rotor (K), ayant chacun un enroulement de rotor (L1, ..., L6), les enroulements de rotor des pôles étant branchés en série entre deux bornes (A1, A2) électriques du rotor (R) qui servent à l'arrivée ou au départ d'un courant d'excitation électrique à travers les enroulements de rotor ;
le circuit série possédant une première portion, à laquelle appartiennent n/2 enroulements de rotor (L1, ..., L3) disposés en premier dans le circuit série à partir d'une première des bornes, et une deuxième portion, à laquelle appartiennent les n/2 enroulements de rotor (L4, ..., L6) supplémentaires restants disposés dans le circuit série avant la deuxième des bornes ; **caractérisé en ce que**
les enroulements de rotor (L1, ..., L6) et le circuit série sont réalisés de telle sorte que lors de l'application d'une tension continue entre les deux bornes (A1, A2) dans chacun des enroulements de rotor de la première portion, la composante radiale orientée dans le sens de la hauteur d'enroulement de l'enroulement de rotor respectif du flux de courant continu à travers l'enroulement de rotor (L1, ..., L3) respectif qui se produit dans le circuit série suit globalement un tracé d'un côté intérieur vers un côté extérieur de l'enroulement de rotor (L1, ..., L3) et, dans chacun des enroulements de rotor (L4, ..., L6) de la deuxième portion, inversement globalement d'un côté extérieur vers un côté intérieur de l'enroulement de rotor (L4, ..., L6).

2. Rotor (R) selon la revendication 1, la première portion et la deuxième portion étant, dans le cadre du circuit série, connectées à un point de liaison (V) de telle sorte que les deux enroulements de rotor (L3, L4) connectés directement l'un à la suite de l'autre et au-delà du point de liaison (V) sont respectivement connectés au point de liaison (V) à partir d'une portion d'enroulement se trouvant du côté extérieur de son enroulement respectif.

3. Rotor (R) selon la revendication 1, la première portion et la deuxième portion étant, dans le cadre du circuit série, connectées à un point de liaison (V) de telle sorte que les deux enroulements de rotor (L3, L4) connectés directement l'un à la suite de l'autre et au-delà du point de liaison (V) sont respectivement connectés au point de liaison (V) à partir d'une portion d'enroulement se trouvant du côté intérieur de son enroulement respectif.

4. Rotor (R) selon l'une des revendications précédentes, les enroulements de rotor (L1, ..., L6) et le circuit série étant réalisés symétriques de telle sorte que la capacité de fuite électrique (C1 à C3) de la première portion par rapport au corps de rotor (K) correspond au moins sensiblement à la capacité de fuite électrique (C4 à C6) de la deuxième portion par rapport au corps de rotor (K).

5. Rotor (R) selon l'une des revendications précédentes, les enroulements de rotor (L1, ..., L6) et le circuit série étant réalisés symétriques de telle sorte que la différence entre les capacités de fuite électrique (C1 à C3) de la première portion et les capacités de fuite électrique (C4 à C6) de la deuxième portion, respectivement par rapport au corps de rotor (K), ne se montent pas à plus de 10 %, de préférence 5 %, particulièrement de préférence 2 % de la capacité de fuite résultante de la totalité du circuit série des n enroulements de rotor (L1, ..., L6) qui suit un tracé entre les bornes du rotor.

6. Circuit de rotor pour un moteur synchrone à excitation externe ; comprenant :
un rotor (R) selon l'une des revendications précédentes ;
une première ligne d'alimentation destinée à relier un premier pôle d'une alimentation en tension continue (B) à la première des bornes (A1) du rotor (R) et une deuxième ligne d'alimentation destinée à relier un deuxième pôle opposé de l'alimentation en tension continue (B) à la deuxième des bornes (A2) du rotor (R) ; et
un diviseur de tension (C_{y}) capacitif branché entre la première et la deuxième ligne d'alimentation, comprenant une première capacité Y (C_{y1}) entre la première ligne d'alimentation et une liaison électriquement conductrice vers le corps de rotor (K) et une deuxième capacité Y (C_{y2}) entre cette liaison et la deuxième ligne d'alimentation.

7. Circuit de rotor selon la revendication 6, la première ligne d'alimentation possédant une première résistance commandable (T1) et la deuxième ligne d'alimentation une deuxième résistance commandable (T2) et une diode de roue libre (D) pour l'enroulement de rotor (L1, ..., L6) étant branchée entre la première et la deuxième résistance commandable (T1, T2) et en parallèle avec les bornes (A1, A2) de l'enroulement de rotor (L1, ..., L6) .

8. Circuit de rotor selon la revendication 7, comprenant en outre un dispositif de commande (S) destiné à commander les résistances commandables (T1, T2) au moyen d'un signal de commande modulé PWM.

9. Moteur synchrone à excitation externe (EM), notamment moteur de traction pour un véhicule pouvant être propulsé électriquement, comprenant un rotor (R) selon l'une des revendications 1 à 5 ainsi qu'un stator (ST) associé au rotor et destiné à générer un effet électromoteur en interaction entre le stator (ST) et le rotor (R).

10. Moteur synchrone (EM) selon la revendication 9, comprenant un circuit de rotor selon l'une des revendications 6 à 8.
